# FASCICULE DE BREVET EUROPEEN

(11) **EP 3 887 161 B1**
(45) Date de publication et mention de la délivrance du brevet: **26.11.2025**
(21) Numéro de dépôt: 19868196.7
(22) Date de dépôt: 29.11.2019
(51) Int. Cl.: B33Y 10/00, B29C 64/165, B29C 64/10

(54) **PROCÉDÉ DE FABRICATION ADDITIVE ASSISTÉ PAR UN MILIEU CONTRAINT GRANULAIRE**
VERFAHREN ZUM ADDITIVEN HERSTELLEN IN EINER GRANULATUMGEBUNG
PROCESS FOR ADDITIVE ASSITED MANUFACTURING IN A GRANULAR ENVIRONMENT

(30) Priorité: 30.11.2018 FR 1872173
(43) Date de publication de la demande: 06.10.2021
(73) Titulaire: Université Claude Bernard Lyon 1, 69100 Villeurbanne (FR); Centre National de la Recherche Scientifique, 75016 Paris 16 (FR); Institut National des Sciences Appliquees de Lyon (Insa Lyon), 69100 Villeurbanne (FR); Ecole Superieure de Chimie, Physique, Electronique de Lyon, 69100 Villeurbanne (FR)
(72) Inventeur: MARQUETTE, Christophe, 69100 Villeurbanne (FR); COURTIAL, Edwin-Joffrey, 69100 Villeurbanne (FR); DELBARRE, Alizée, 74320 Sévrier (FR); COLLY, Arthur, 69100 Villeurbanne (FR)
(74) Mandataire: INNOV-GROUP
(86) Numéro de dépôt international: PCT/FR2019/052865
(87) Numéro de publication internationale: WO 2020/109745

(56) Documents cités:
- EP-A1- 3 159 141
- WO-A1-2016/090286
- WO-A1-2017/019102
- WO-A1-2018/187780
- WO-A2-2006/093778
- US-A- 524 747
- US-A1- 2003 090 034
- US-A1- 2015 335 407
- US-A1- 2016 167 312
- US-A1- 2016 288 206
- US-A1- 2018 057 682

## Description

### DOMAINE TECHNIQUE

L'invention a trait au domaine de la fabrication additive et concerne un procédé et un dispositif permettant la mise en œuvre du matériau de constitution lors de la réalisation d'une pièce.

La fabrication additive, également dénommée « impression 3D », est une technologie de fabrication par ajout de matière qui permet de produire des pièces tridimensionnelles par empilement de couches successives de matière. Dans la présente description, le terme « impression » est employé pour désigner la réalisation d'une pièce par un procédé de fabrication additive, et le terme « matériau imprimé » désigne le matériau qui est mis en forme au cours de ce procédé et qui constitue tout ou une partie de la pièce fabriquée.

### ART ANTÉRIEUR

Actuellement, l'essentiel des procédés de fabrication additive peuvent se regrouper en trois grandes familles : les procédés par dépôt de matière ; les procédés par consolidation sélective ; et les procédés par projection de liant sur poudre.

Dans les procédés par dépôt de matière, le matériau imprimé est un matériau d'apport, fourni sous forme de fil, de granulé ou de liquide, qui est projeté ou déposé couche par couche. Il s'agit par exemple des procédés par dépôt de fil en fusion (FDM, pour « Fused deposition modeling », en anglais), de liquides viscoélastiques (LDM, pour « Liquid deposition modeling », en anglais), ou des procédés par modelage à jets multiples (MJP pour « Multi Jet Printing », en anglais). Pour la réalisation de pièces complexes comportant d'importants porte-à-faux (ou surplombs), ces procédés nécessitent l'emploi de socles et de supports qui sont imprimés en plus de la pièce et qui maintiennent la pièce en position ou qui empêchent les parties en porte-à-faux de s'effondrer. Pour ces procédés, l'emploi d'un matériau imprimé aux propriétés d'écoulement non adaptées (par exemple : de faibles viscosités, de contrainte seuil insuffisante ou présentant un comportement thixotrope notable) est impossible ou limité à des formes de pièces très simples.

Dans les procédés par consolidation sélective, le matériau imprimé est placé dans un réservoir, sous forme liquide ou sous forme de poudre, et un moyen d'apport d'énergie tel qu'un laser balaye ce matériau, couche par couche, successivement. Le matériau imprimé est lui-même éventuellement distribué par couches successives dans le réservoir avant le passage du moyen d'apport d'énergie. Le matériau imprimé contenu dans le réservoir se solidifie uniquement aux endroits précis où le moyen d'apport d'énergie est passé. Il n'y a pas de matériau d'apport, tout le matériau imprimé est contenu dans le réservoir. Au terme des opérations, une portion sélective du matériau contenu initialement dans le réservoir constituera la pièce finie. Des exemples de procédés par consolidation sélective sont donnés par la stéréolithographie (SLA, « Stereolithography Apparatus », en anglais), la fusion sélective par laser (SLM, « Selective Laser Melting » en anglais), le frittage sélectif par laser (SLS, « Selective Laser Sintering », en anglais), ou encore la fusion par faisceau d'électrons (EBM, « Electron Beam Melting »). Ces procédés sont applicables à différentes familles de matériaux telles que les métaux, les céramiques ou les polymères, sous forme de poudre solide ou de liquides durcissables par apport d'énergie ou activation photochimique (UV ou autres). L'application à un matériau imprimé très fluide n'est possible que si ce matériau est durcissable à l'aide d'une source lumineuse, et l'application à des matériaux mous est peu évidente.

Dans les procédés par projection de liant sur poudre, (par exemple « Binder jetting », en anglais), un liant est projeté sur une poudre disposée successivement en couches dans un réservoir. Aux endroits où le liant est projeté, le liant se mêle à la poudre et réagit avec elle en créant un matériau solide constitué de liant et de poudre. Le matériau imprimé est créé suite à la projection de liant et est donc constitué d'un assemblage composite de liant et de poudre. Ces procédés ne permettent pas de réaliser des pièces homogènes d'un matériau imprimé unique qui serait, au moment du dépôt, fondu ou non encore polymérisé. La fabrication de pièces à partir d'un matériau imprimé unique très fluide ou mou est impossible.

La demande de brevet US2018057682 décrit un procédé de fabrication additive en dehors des catégories classiques décrites précédemment. Selon ce procédé, le matériau imprimé est une encre à base de silicone. Ce matériau imprimé est déposé à l'état liquide dans un gel constitué de particules de microgel de polymère. Chacune des particules de microgel comporte un réseau polymère réticulé et un solvant organique. Plus précisément, les particules de microgel sont gonflées d'un solvant organique tel que de l'huile minérale. La proportion en masse du solvant organique dans le gel est de préférence de 90% à 99.9%, ou de 80 à 95%, ou de plus de 85%. Selon ce document, la tension superficielle d'interface entre le silicone et le solvant organique est propice à l'impression de l'encre à base de silicone avec le gel comme phase suspendante, ce qui permet l'impression de pièces en silicone. Les exemples décrits indiquent des diamètres moyens de particules de microgel compris entre 2 et 6 µm, ou entre 0,1 µm et 100 µm. Selon des modes de réalisation décrits, le gel peut être constitué de particules qui deviennent de préférence malléables ou fluides par une action mécanique, électrique, radiante, photonique, ou autre. Dans certains modes de réalisation, le gel peut être traité pour éliminer le solvant et se présenter sous forme de poudre qui peut être mise en sachets facilement pour le transport et la vente, sans nécessiter de contenants couteux nécessaires à un produit à base d'huile, qui est surtout liquide. Dans ce cas, avant l'impression, le gel doit être reconstitué par l'utilisateur en mélangeant à la poudre un complément approprié de solvant organique. Ce procédé permet l'impression de pièces souple en silicone, ce qui est difficile, voire impossible avec les procédés classiques. Cependant, la formulation du gel est complexe et pose des problèmes en matière de stockage, de sécurité, et de manipulation. Par ailleurs, la buse de dépôt de silicone laisse un sillon dans le gel qui ne se referme qu'imparfaitement, ce qui implique des vitesses d'impression lentes et des imperfections dans les pièces imprimées.

### EXPOSÉ DE L'INVENTION

L'invention a pour but d'améliorer les procédés de fabrication additive de l'art antérieur.

A cet effet, l'invention vise un procédé de fabrication additive incluant le dépôt d'un matériau pour former un objet tridimensionnel, procédé dans lequel au moins une étape de dépôt du matériau est réalisée en suspension au sein d'un milieu contraint granulaire qui comporte :
- une phase granulaire constituée uniquement d'un matériau se présentant sous la forme d'éléments discrets et solides qui interagissent au niveau de zones de contacts entre eux ;
- et une phase interstitielle gazeuse.

Un tel procédé de fabrication additive est adapté aux matériaux présentant des propriétés d'écoulement, notamment aux matériaux fluides, aux matériaux mous, et aux matériaux viscoélastiques. Des formes d'objets 3D complexes, tels que des tissus organiques, peuvent ainsi être imprimés avec la qualité requise et ce, pour des vitesses d'impression importantes grâce à la contrainte appliquée sur toute la superficie de la pièce réalisée, par le milieu contraint granulaire. Les éléments discrets constituant le milieu contraint granulaire s'adaptent à leur contenant et à la forme de l'objet imprimé en son sein en travaillant à sec, surface d'élément discret contre surface d'élément discret.

Le milieu granulaire est dit « contraint » car les éléments le constituant sont contraints les uns envers les autres, et sont ainsi adaptés à exercés eux-même une contrainte sur le matériau imprimé. Dans un exemple préféré, le milieu granulaire est contraint par la gravité s'exerçant sur chaque élément du milieu granulaire. Un bac contenant le milieu granulaire peut compléter cette contrainte de la gravité en maintenant le milieu granulaire entre ses parois.

Un autre objet de l'invention vise un dispositif de fabrication additive pour la mise en œuvre du procédé tel que décrit ci-dessus. Ce dispositif comporte un bac d'impression contenant un milieu contraint granulaire comprenant : une phase granulaire constituée uniquement d'un matériau se présentant sous la forme d'éléments discrets et solides qui interagissent au niveau de zones de contacts entre eux ; et une phase interstitielle gazeuse.

Selon un mode de réalisation du dispositif, ce dernier comporte un dispositif d'ajustement de la pression du milieu contraint granulaire.

Le procédé de fabrication additive peut comporter les caractéristiques additionnelles suivantes, seules ou en combinaison :
- la phase granulaire présente une propriété d'angle de talus inférieur à 40° ;
- la phase granulaire présente une propriété de compressibilité inférieure à 200 m/N ;
- la phase granulaire présente un indice de Carr inférieur à 25 ;
- les conditions ambiantes dans lesquelles est plongé le milieu contraint granulaire sont présentes entre les éléments discrets ;
- la phase granulaire est un matériau monophasique, qui est réticulé ou amorphe ou cristallisé ;
- la phase granulaire est un polymère pulvérisé ;
- la phase granulaire est un gel de silice déshydraté pulvérisé ;
- la phase granulaire est un acétate de polyvinyle pulvérisé ;
- la phase granulaire est un polyméthacrylate de méthyle pulvérisé ;
- la phase granulaire est composée de bicarbonate de soude ;
- la phase granulaire est composée de sable ;
- la phase granulaire est composée de cénosphères ;
- le diamètre moyen des cénosphères est de 100 à 200 µm ;
- la masse volumique du matériau constituant les cénosphères est de 0,6 à 0,8 g/cm3 ;
- la masse volumique apparente des cénosphères est de 0,3 à 0,5 g/cm3 ;
- le matériau déposé présente une viscosité comprise entre 10-1 mPa.s et 107 mPa.s et de préférence comprise entre 102 mPa.s et 106 mPa.s ;
- le procédé comporte en outre une étape d'ajustement de la pression du milieu granulaire contraint ;
- le procédé comporte en outre une étape de contrôle de la température du milieu contraint granulaire ;
- la phase interstitielle gazeuse comporte un gaz inerte ;
- la phase interstitielle gazeuse comporte de l'air ;
- le matériau déposé est une composition de silicone réticulable qui après réticulation forme un élastomère silicone ;
- la phase granulaire est composée de granules de silicone broyé.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] la figure 1 est une vue générale schématique d'un dispositif selon l'invention ;
[Fig.2] la figure 2 est une vue agrandie du milieu contraint du dispositif selon la figure 1 ;
[Fig.3] la figure 3 illustre le travail de la buse du dispositif de la figure 1, dans le milieu contraint granulaire ;
[Fig.4] la figure 4 illustre le travail de la buse du dispositif de la figure 1, dans le milieu contraint granulaire ;
[Fig.5] la figure 5 illustre le travail de la buse du dispositif de la figure 1, dans le milieu contraint granulaire.

### DESCRIPTION DÉTAILLÉE

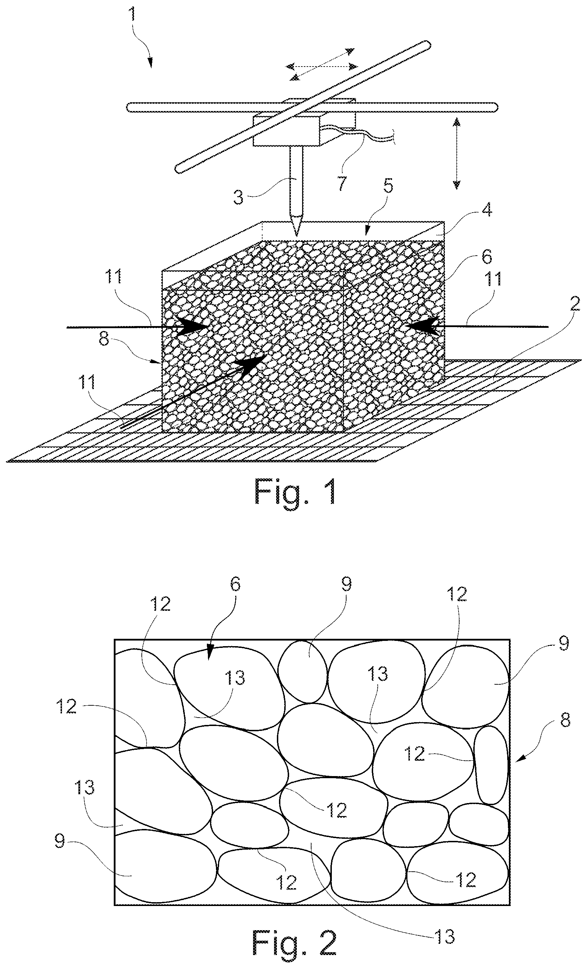

La figure 1 représente schématiquement un dispositif de fabrication additive selon l'invention. Ce dispositif est, dans le présent exemple, une imprimante 3D 1 qui comporte un plateau 2 et une tête de dépôt de matière. La tête de dépôt de matière est ici une buse d'impression 3.

La buse d'impression 3 est mobile par rapport au plateau 2 (par exemple : suivant trois translations orthogonales pour les imprimantes cartésiennes) de sorte que l'extrémité de la buse puisse occuper tous les points du volume utile d'impression. Les dispositifs mécaniques permettant ces trois translations sont bien connus dans le domaine des imprimantes 3D et ne seront pas décrits plus en détails ici.

Le volume utile d'impression est délimité par un bac d'impression 4 fixé sur le plateau 2. Le bac 4 est, dans le présent exemple, parallélépipédique et forme un contenant comportant une ouverture 5 supérieure.

Le bac 4 contient un milieu contraint granulaire 8 qui est constitué d'une phase granulaire 6 ainsi que d'une phase interstitielle gazeuse 13 (voir figure 2 qui est une vue agrandie du milieu contraint granulaire). Sur la figure 1, le bac 1 est réalisé en un matériau transparent permettant de voir le milieu contraint granulaire 8 qui y est contenu.

La phase granulaire 6 du milieu contraint 8 est un ensemble d'éléments physiques indépendants et monodispersés pouvant se présenter sous différents facteurs de forme. La phase granulaire peut être par exemple un solide pulvérisé à condition que : ce solide pulvérisé soit monodispersé, c'est-à-dire que toutes les particules le composant présentent la même taille ou une taille très similaire ; et qu'il soit homogène c'est à dire qu'il présente les mêmes propriétés, ou des propriétés très voisines, partout.

La phase granulaire 6 est un réseau continu de particules solides de même taille. Autrement dit, les particules se touchent et les interactions entre les particules au sein du milieu contraint granulaire sont régies par des mécanismes collectifs. Ni fluide, ni solide, un milieu contraint granulaire ne se comporte pas comme un solide car il est déformable, dispersible et écoulable, et ne se comporte pas comme un liquide puisque, par exemple, lorsqu'on le comprime il se dilate. Le milieu contraint granulaire selon l'invention se différencie des gels chargés de particules de polymères réticulés de l'art antérieur, gels dans lesquels les particules sont dans un solvant organique qui les solvate. Dans ces gels de l'art antérieur, les particules ne se touchent donc pas nécessairement et les propriétés mécaniques découlent d'interactions plus complexes liées à la solvatation.

La phase interstitielle 13 est de préférence constituée d'air de sorte que l'air ambiant dans lequel est plongé l'imprimante 3D 1 se retrouve également dans les interstices de la phase granulaire 6. En variante, la phase interstitielle 13 peut comporter un gaz inerte, ou un mélange de gaz inerte (le bac 4 étant alors plongé dans une enceinte étanche remplie du gaz souhaité). La phase interstitielle 13 peut également comporter une faible quantité d'air présent après une mise sous vide du bac 4.

La mécanique de l'imprimante 3D 1 et la commande de ses axes sont les mêmes que celles d'une imprimante 3D par dépôt de matière. Ainsi, un modèle numérique de la pièce à imprimer est tout d'abord créé puis tranché en un ensemble de plans horizontaux successifs. La buse 3 sera ensuite commandée pour parcourir chacune de ces tranches en déposant un matériau imprimé aux endroits définis. Le matériau imprimé est ainsi déposé couche par couche jusqu'à la formation de la pièce finie.

Le matériau imprimé est apporté à la buse 3 par un canal d'apport 7 représenté de manière schématique sur la figure 1, qui peut être de tout type adapté au matériau imprimé choisi.

Le canal d'apport 7 peut être sous forme de fil ou de granulés de matière, dans le cas où le matériau d'apport est thermoformable et conditionné sous forme d'une bobine de fil ou de bac de granulés, respectivement. Dans le cas d'une bobine de fil, celle-ci est déroulée et le fil de matériau est passé dans la buse 3. Dans le cas d'un bac de granulés, ceux-ci sont entrainés par une vis d'extrusion et passés dans la buse 3. Dans tous les cas, la buse 3 est adaptée à chauffer le fil ou les granulés de matériau au-delà de sa température de fusion et à le déposer sous cette forme fondue.

Le canal d'apport 7 peut aussi, par exemple, être un tube dans lequel circule le matériau imprimé dans le cas où ce dernier est suffisamment fluide. Le matériau imprimé peut-être, dans ce cas, mis en circulation par une pompe ou un dispositif à piston tel qu'une seringue (non représentés), montés sur la buse 3 ou ailleurs sur le dispositif.

Quel que soit le type du canal d'apport 7, la buse 3 est adaptée à délivrer par son extrémité le matériau imprimé dans un état suffisamment fluide pour être déposé.

La figure 2 est une vue agrandie d'une portion du milieu contraint granulaire 8. La phase granulaire 6 est un amas d'éléments solides discrets 9. Cet amas, par son caractère pulvérisé et non cohésif, épouse la forme du bac 4 grâce à l'agencement spontané de ces éléments discrets 9 qui prennent appui les uns sur les autres sous l'effet de leur propre poids, comme représenté à la figure 2. Les éléments discrets 9 interagissent les uns avec les autres en s'appuyant sur les zones de contacts 12 que chaque élément discret 9 présente avec les éléments discrets 9 qui l'entourent. Le milieu contraint granulaire 8 comporte ces éléments discrets 9 ainsi que, entre les éléments discrets 9, la phase interstitielle gazeuse 13. Le comportement mécanique du milieu contraint granulaire 8 n'est dû qu'à la modification des contacts 12 entre les éléments discrets 9, sans influence de la phase interstitielle gazeuse 13, cette dernière ne participant au comportement mécanique du milieu contraint granulaire 8 que dans la mesure où elle permet la modification des zones de contact 12 entre éléments discrets 9.

Les éléments discrets 9 sont de préférence non déformables (en dehors d'une légère déformation élastique) de sorte que, en prenant appui les uns sur les autres, des interstices d'air (ou de tout autre fluide environnant l'imprimante 3D 1) sont formés entre les éléments discrets 9 et constituent la phase interstitielle gazeuse 13. En effet, les conditions ambiantes du milieu contraint granulaire sont également présentes entre les éléments discrets. Ainsi, si l'imprimante 3D 1 est dans l'air de l'atmosphère terrestre, cet air sera présent dans les interstices. De même, si l'imprimante 3D 1 est, par exemple, dans une enceinte sous vide, ce vide sera alors également présent dans les interstices. La notion de vide fait ici référence à une situation où une forte dépression est créé dans les interstices de la phase granulaire 6, c'est-à-dire dans la phase gazeuse qui comporte alors très peu d'air.

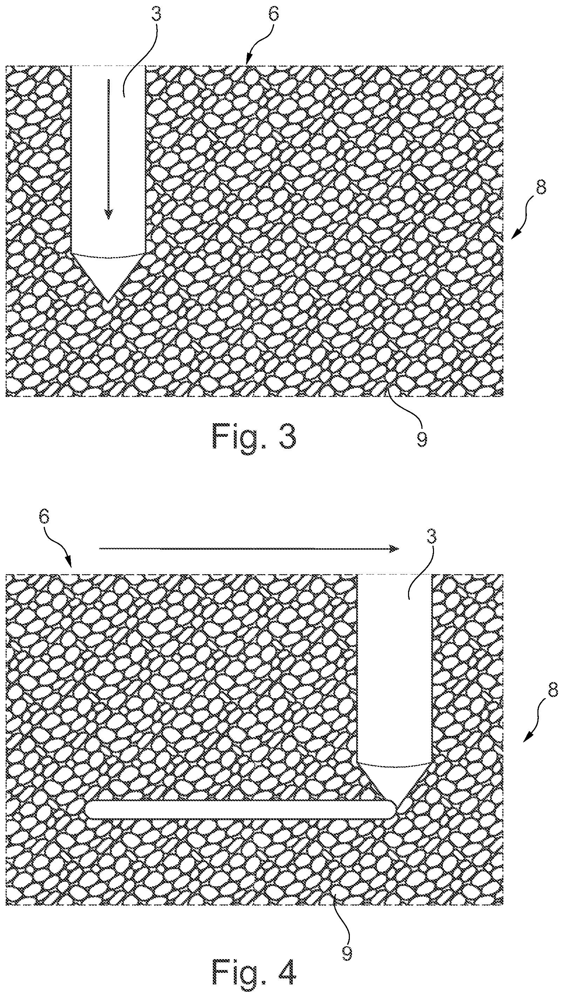

En référence à la figure 3, les mouvements relatifs possibles des éléments discrets 9 au sein du milieu contraint granulaire 8 permettent à la buse 3 d'être introduite dans le milieu 8, en provoquant un déplacement des éléments discrets 9 tout autour d'elle. La figure 3 est une vue schématique dans un plan de coupe suivant l'axe longitudinal de la buse 3 et montre la buse 3 après avoir été introduite verticalement dans le milieu contraint granulaire 8.

En référence à la figure 4, cette même possibilité de mouvements mutuels des éléments discrets 9 permet le déplacement de la buse 3 au sein du milieu contraint granulaire 8 et le dépôt du matériau imprimé pendant ce déplacement. Au cours du déplacement de la buse, cette dernière écarte les éléments discrets 9 présents sur son trajet tandis que, derrière elle, les éléments discrets 9 se rassemblent et comblent le vide laissé. La phase granulaire 6 a donc toujours la même homogénéité tout autour de la buse, sans sillage ou autre perturbation.

Le milieu contraint granulaire 8 crée autour du matériau imprimé déposé, une contrainte garantissant le maintien en place du matériau imprimé dans le contour qui lui a été attribué par la buse 3. Cette forme de contention est particulièrement avantageuse dans le cas d'un matériau imprimé très fluide qui s'écoulerait en l'absence de cette contrainte. Le matériau imprimé étant maintenu dans ce milieu contraint, l'état de surface extérieur de la pièce finie peut dépendre de la granulométrie de la phase granulaire 6.

La granulométrie de la phase granulaire est de préférence comprise entre 1 µm et 1000 µm, avantageusement entre 25 et 250 µm et plus avantageusement entre 75 et 150 µm (valeur données en distribution « D50 »). Cependant, bien que cette granulométrie préférée permettre une mise en œuvre aisée de la phase granulaire lors de la mise en place de l'impression, la granulométrie n'est pas la principale caractéristique de la phase granulaire qui permet une impression de qualité.

Le milieu contraint granulaire 8 remplit sa fonction en étant sec et peut donc contenir tout type de matériaux de base, tels que des matériaux fluides instables ou tout polymère avant réticulation, sans risques de réaction entre le matériau fraichement déposé et le milieu contraint. Ceci est particulièrement avantageux dans le domaine de la santé.

Le milieu contraint granulaire 8 assure le maintien en position du matériau imprimé aussi longtemps que nécessaire à son durcissement, que ce durcissement soit réalisé par traitement thermique, chimique, photo-chimique ou tout autre opération. Dans le cas d'un durcissement par exposition à un rayon, le bac 4 est de préférence transparent et le solide pulvérisé est au moins partiellement translucide afin de ne pas absorber la source lumineuse.

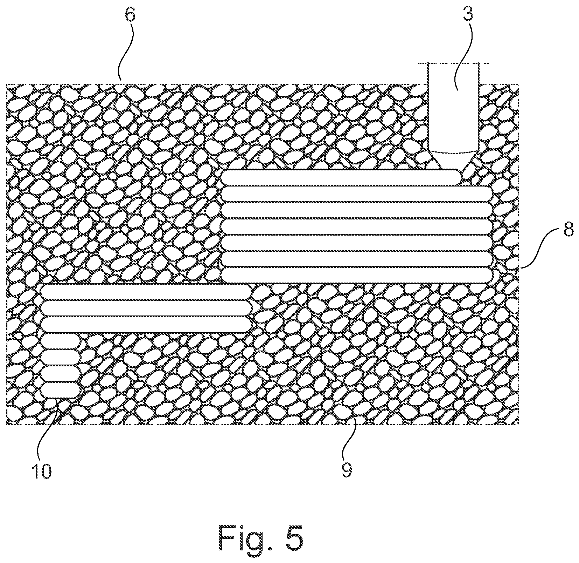

La figure 5 est une coupe verticale du milieu contraint granulaire 8 montrant le profil d'une pièce 10 en cours de réalisation. La pièce 10 est un exemple simple de pièce facilement imprimable dans le milieu contraint granulaire 8, avec une qualité maximale, bien que cette pièce comporte d'importants porte-à-faux et des changements brusques de section. Une telle pièce peut de surcroit être imprimée avec un matériau imprimé fluide tel qu'un polymère en phase caoutchoutique (température supérieure ou égale à la transition vitreuse), liquide (température supérieure ou égale à la température de fusion, par exemple à base d'un thermoplastique semi-cristallin) ou une composition silicone réticulable. Le milieu contraint granulaire fournit non seulement un support pour les parties de pièce en porte-à-faux et les changements brusques de section, mais fournit également une forme de contrainte volumique pour chaque couche de matériau imprimé, c'est à dire une contrainte sur tout le contour du matériau déposé.

Le milieu contraint procure un milieu stable pour le durcissement du matériau imprimé, même si ce dernier a été imprimé à haute température.

La pièce 5 une fois terminée est ensuite extraite du milieu contraint granulaire 8 et est directement utilisable car elle n'a pas nécessité l'impression de socles, de supports ou d'autres ajouts extérieurs à la forme de la pièce. Le matériau constituant la pièce 5 est uniquement le matériau imprimé qui a été apporté à la buse 3 par le canal d'apport 7. Le milieu contraint granulaire 8 ne conserve pas en son sein de matériau imprimé et peut immédiatement être réemployé pour l'impression de nouvelles pièces.

La phase granulaire est de préférence un matériau non-hydraté (pas d'émulsion), réticulé ou amorphe ou cristallisé, et de préférence constituée à partir d'un matériau solide broyé. Le gel de silice déshydraté (qui, bien que portant ce nom, n'est pas du tout un gel mais un solide), l'acétate de polyvinyle, ou encore le polyméthacrylate de méthyle, en tant que phases granulaires associées à une phase interstitielle d'air, donnent d'excellents résultats car il est possible d'imprimer, dans un milieu contraint granulaire réalisé à partir de ces matériaux, des pièces complexes avec, comme matériau imprimé, des matériaux d'une large gamme de viscosité, allant de 10⁻¹ mPa.s à 10⁷ mPa.s. A titre de comparaison, les matériaux dont la viscosité est voisine de 10⁻¹ mPa.s à 10³ Pa.s, sont tout simplement impossibles à imprimer avec les procédés de dépôt de matières classiques (précédemment cités), et sont difficiles à imprimer dans un gel constitué de particules de microgel polymère hydraté, c'est à dire que l'impression a lieu mais génère des pièces avec un faible niveau de qualité (présence de défauts dimensionnels et de forme).

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Par exemple, une composition silicone réticulable se présentant sous la forme d'un monocomposant ou d'un bicomposant dans la plage de viscosités indiquée, 10² mPa.s à 10⁶ mPa.s, peut être employé comme matériau imprimé avec une qualité satisfaisante même pour des pièces complexes.

Par ailleurs, des matériaux présentant un faible seuil à l'écoulement (« yield stress », en anglais) peuvent également être utilisés comme matériau imprimé. Ces matériaux ne présentent pas un seuil d'écoulement suffisant pour maintenir leur forme sous leur propre poids ou sous la compression des couches déposés, et sont cependant avantageusement imprimés par l'imprimante 3D selon l'invention. Les matériaux présentant un seuil d'écoulement suffisant pour maintenir leur forme sous leur propre poids peuvent a fortiori également être utilisés comme matériau imprimé.

Selon une variante, l'imprimante 3D 1 comporte un dispositif d'ajustement de la pression du milieu contraint granulaire 8. Ces moyens sont schématisés par des flèches 11 sur la figure 1. Dans le milieu contraint granulaire 8, la contrainte est ainsi ajustable. La force exercée par un élément discret du milieu granulaire sur les éléments discrets voisins peut en effet être contrôlée par ce dispositif d'ajustement de la pression du milieu contraint de mise sous pression afin de garantir la qualité de l'impression. Par exemple, la mise sous pression peut être réalisée par voie pneumatique (augmentation de la pression atmosphérique de l'enceinte de l'imprimante 3D 1) ou par voie mécanique ou hydraulique (augmentation de la pression interne du milieu granulaire par application d'une force sur les parois du bac 4). Le procédé selon l'invention comporte, selon cette variante, une étape d'ajustement de la pression du milieu granulaire contraint. La pression du milieu granulaire contraint désigné ici la pression que les éléments constituant le milieu granulaire exercent les uns sur les autres. Cette variante est particulièrement adaptée pour une utilisation dans une zone sans gravité.

Selon une autre variante particulièrement adaptée à l'impression de matériaux thermoplastiques, le milieu granulaire contraint 8 est contrôlé en température. Le milieu granulaire contraint 8 peut ainsi puisse être chauffé ou refroidi pour obtenir une température adéquate au dépôt d'un matériau particulier. Le procédé selon l'invention comporte, selon cette variante, une étape de contrôle de la température du milieu contraint granulaire.

Des variantes de réalisation peuvent être envisagées sans sortir du cadre de l'invention. Par exemple, le milieu contraint granulaire 8 peut être constitué d'un bac contenant des microbilles. Tout autre forme peut être envisagée pour les éléments discrets 9 à partir du moment où ces forment permettent un mouvement mutuel des éléments discrets 9.

Par ailleurs, le milieu contraint granulaire 8 permet des modes d'impression alternatifs à l'impression couches par couches, tel que des modes d'impression directement en trois dimensions, c'est à dire avec un mouvement de la buse simultanément selon les trois dimensions de l'espace.

Les inventeurs ont par ailleurs caractérisé les propriétés de la phase granulaire qui étaient propices à améliorer l'impression notamment de matériaux présentant, en cours d'impression, une faible viscosité. Les recherches théoriques et pratiques ont déterminé, de manière contre-intuitive, que la qualité de l'impression dépendait peu de la granulométrie de la phase granulaire solide. Une impression de qualité peut ainsi être obtenue avec une phase granulaire d'une forte granulométrie, tandis qu'une autre phase granulaire à forte granulométrie pourra donner de mauvais résultats. De même, une impression de qualité peut être obtenue avec une phase granulaire de faible granulométrie, tandis qu'une autre phase granulaire de faible granulométrie pourra donner de mauvais résultats.

La qualité d'impression ici évoquée est relative à la production d'une impression tridimensionnelle respectant les formes et les dimensions du modèle numérique initial. Les inventeurs ont déterminé que la qualité d'impression dépendait de la capacité de la phase granulaire 6 à être déplacée par le mouvement de la buse d'impression 3 au sein du milieu granulaire 8, de la capacité de la phase granulaire 6 à refermer rapidement le sillon creusé dans le milieu granulaire 8 après le passage de la buse d'impression 3, ainsi que de la capacité de la phase granulaire 6 à soutenir et contraindre les formes imprimées avant leur solidification.

Les trois caractéristiques principales de la phase granulaires solide, permettant une impression de qualité, sont les suivantes :
- l'angle de talus ;
- la compressibilité ;
- la coulabilité.

L'angle de talus, également dénommé « angle de talus naturel » ou encore « angle du talus d'éboulement » est une propriété de la phase granulaire relative à son comportement mécanique sous l'effet de la gravité. L'angle de talus est, dans le présent exemple, considéré suivant la norme ISO 4324. Dans le présent exemple la phase granulaire 6 présente un angle de talus inférieur à 40°, et de préférence inférieur à 35°, voire inférieur à 30°.

La compressibilité de la phase granulaire 6 rend compte de son aptitude à être comprimée sous l'effet d'une force. La compressibilité est exprimée en m/N. Dans le présent exemple la phase granulaire 6 présente une compressibilité inférieure à 200 m/N, et de préférence inférieure à 50 m/N.

La coulabilité de la phase granulaire 6 est relative à son aptitude à permettre des mouvements relatifs entre ses éléments discrets 9, et notamment à épouser la forme d'un contenant. La coulabilité est appréhendée, dans le présent exemple, grâce à l'indice de Carr de la phase granulaire 6. Dans le présent exemple la phase granulaire 6 présente un indice de Carr inférieur à 25, et de préférence inférieur à 6.

Ces propriétés d'angle de talus, de compressibilité, et de coulabilité peuvent, indépendamment les unes des autres, influer sur la qualité d'impression. Par ailleurs les combinaisons suivantes de ces caractéristiques conduisent à l'obtention d'une phase granulaire propice à une impression de qualité :
- un angle de talus inférieur à 40°, et de préférence inférieur à 35°, voire 30°, combiné à une compressibilité inférieure à 200 m/N, et de préférence inférieure à 50 m/N ;
- un angle de talus inférieur à 40°, et de préférence inférieur à 35°, voire 30°, combiné à un indice de Carr inférieur à 25, et de préférence inférieur à 6 ;
- une compressibilité inférieure à 200 m/N, et de préférence inférieure à 50 m/N, combinée à un indice de Carr inférieur à 25, et de préférence inférieur à 6 ;
- un angle de talus inférieur à 40°, et de préférence inférieur à 35°, voire 30°, combiné à une compressibilité inférieure à 200 m/N, et de préférence inférieure à 50 m/N, et combiné à un indice de Carr inférieur à 25, et de préférence inférieur à 6.

À titre d'exemple, le tableau ci-dessous liste des types de matériaux donnant de bons résultats comme phase granulaire pour l'impression :

| Phase granulaire solide | Granulométrie (Rayon moyen de particule en µm) | Angle de talus (en degrés) | Compressibilité (m/N) | Coulabilité (Indice de Carr) |
|---|---|---|---|---|
| Lessive en poudre | 320 | 33,06 | 157,95 | 22,01 |
| Café finement moulu | 115 | 32,36 | 82,80 | 11,62 |
| Sucre | 451 | 30,71 | 67,60 | 9,20 |
| Sable | 431 | 29,60 | 43,80 | 5,94 |
| Cénosphères | 107 | 29,29 | 41,15 | 5,66 |
| PMMA pulvérisé | 91 | 20,45 | 32,25 | 4,69 |
| Bicarbonate de soude | 165 | 26,04 | 29,33 | 3,98 |
| Sel fin | 1200 | 32,33 | 27,98 | 3,82 |
| Silice | 102 | 17,74 | 15,08 | 2,28 |

Des résultats particulièrement intéressants sont obtenus avec une phase granulaire constituée de cénosphères, qui sont des billes creuses, grâce à la fois aux propriétés de forme de surface, et aux propriétés élastiques de telles billes creuses. Dans le présent exemple, des cénosphères sont des billes creuses faites de polymère, dont le diamètre moyen est de 100 à 200 µm, dont la masse volumique du matériau est de 0,6 à 0,8 g/cm³, et dont la masse volumique apparente (compte tenu du caractère creux de la bille) est de 0,3 g/cm³ à 0,5 g/cm³, et de préférence de 0,34 à 0,44 g/cm³.

Parmi ces matériaux, les meilleurs résultats sont obtenus avec le PMMA pulvérisé, le bicarbonate de soude, la silice, et les cénosphères. Des résultats inférieurs mais encore avantageux sont obtenus pour le sable, la lessive en poudre, et le sel fin. Des résultats encore inférieurs mais encore satisfaisant pour des pièces ne requérant pas une précision importante, sont obtenues pour le sucre et le café finement moulu. Par ailleurs, une phase granulaire constituée de granulés de silicone broyé présentant un angle de talus compris entre 35° et 40° donnent également de bons résultats.

Dans la présente description, les valeurs de taille de particules constituant la phase granulaire sont données en valeur « D50 » (qualificatif de distribution de taille des grains, utilisé en granulométrie) qui désigne la taille médiane des particules. De plus, sauf précisions contraires, les caractéristiques indiquées s'apprécient dans des conditions normales de température, de pression et d'humidité.

Par ailleurs, la phase granulaire peut être constituée de granules de différentes matières. Il peut s'agir par exemple d'une phase granulaire constituée d'un matériau principal, et contenant des traces d'un autre matériau, ou par exemple d'une combinaison de deux matériaux distincts mais ayant, en tant que phase granulaire, des propriétés entrant dans la définition de l'invention.

## Revendications

1. Procédé de fabrication additive incluant le dépôt d'un matériau pour former un objet tridimensionnel, **caractérisé en ce qu'**au moins une étape de dépôt du matériau est réalisée par une buse d'impression (3) mobile par rapport à un plateau (2) de sorte que l'extrémité de la buse d'impression (3) puisse occuper tous les points d'un volume utile d'impression délimité par un bac d'impression (4) fixé sur le plateau (2), cette étape de dépôt du matériau étant réalisée en suspension au sein d'un milieu contraint granulaire (8) contenu dans le bac d'impression (4), par un déplacement de la buse d'impression (3) au sein du milieu contraint granulaire (8) et par le dépôt du matériau pendant ce déplacement, ce milieu contraint granulaire (8) comportant :
- une phase granulaire (6) constituée uniquement d'un matériau (9) se présentant sous la forme d'éléments discrets et solides qui interagissent au niveau de zones de contacts (12) entre eux ;
- et une phase interstitielle gazeuse (13).

2. Procédé selon la revendication 1, **caractérisé en ce que** la buse d'impression (3) est introduite dans le milieu contraint granulaire (8) en provoquant un déplacement des éléments discrets autour d'elle.

3. Procédé selon l'une des revendications 1 ou 2, **caractérisé en ce que** la phase granulaire présente une propriété d'angle de talus inférieur à 40°.

4. Procédé selon l'une des revendications 1 à 3, **caractérisé en ce que** la phase granulaire présente une propriété de compressibilité inférieure à 200 m/N.

5. Procédé selon l'une des revendications 1 à 4, **caractérisé en ce que** la phase granulaire présente un indice de Carr inférieur à 25.

6. Procédé selon l'une des revendications 1 à 5, **caractérisé en ce que** les conditions ambiantes dans lesquelles est plongé le milieu contraint granulaire (8) sont présentes entre les éléments discrets (9).

7. Procédé selon l'une des revendications 1 à 6, **caractérisé en ce que** la phase granulaire (6) est un matériau monophasique, qui est réticulé ou amorphe ou cristallisé.

8. Procédé l'une des revendication 1 à 7, **caractérisé en ce que** la phase granulaire (6) est un polymère pulvérisé.

9. Procédé selon l'une des revendications 1 à 7, **caractérisé en ce que** la phase granulaire (6) est un gel de silice déshydraté pulvérisé.

10. Procédé selon l'une des revendications 1 à 7, **caractérisé en ce que** la phase granulaire (6) est un acétate de polyvinyle pulvérisé.

11. Procédé selon l'une des revendications 1 à 7, **caractérisé en ce que** la phase granulaire (6) est un polyméthacrylate de méthyle pulvérisé.

12. Procédé selon l'une des revendications 1 à 7, **caractérisé en ce que** la phase granulaire (6) est composée de bicarbonate de soude.

13. Procédé selon l'une des revendications 1 à 7, **caractérisé en ce que** la phase granulaire (6) est composée de sable.

14. Procédé selon l'une des revendications 1 à 7, **caractérisé en ce que** la phase granulaire (6) est composée de granules de silicone broyé.

15. Procédé selon l'une des revendications 1 à 7, **caractérisé en ce que** la phase granulaire (6) est composée de cénosphères.

16. Procédé selon la revendication 15, **caractérisé en ce que** le diamètre moyen des cénosphères est de 100 à 200 µm.

17. Procédé selon l'une des revendications 15 ou 16, **caractérisé en ce que** la masse volumique du matériau constituant les cénosphères est de 0,6 à 0,8 g/cm³.

18. Procédé selon l'une des revendications 15 à 17, **caractérisé en ce que** la masse volumique apparente des cénosphères est de 0,3 à 0,5 g/cm³.

19. Procédé selon l'une quelconque des revendications précédentes, **caractérisé en ce que** le matériau déposé présente une viscosité comprise entre 10⁻¹ mPa.s et 10⁷ mPa.s et de préférence comprise entre 10² mPa.s et 10⁶ mPa.s.

20. Procédé selon l'une quelconque des revendications précédentes, **caractérisé en ce qu'**il comporte en outre une étape d'ajustement de la pression du milieu granulaire contraint.

21. Procédé selon l'une quelconque des revendications précédentes, **caractérisé en ce qu'**il comporte en outre une étape de contrôle de la température du milieu contraint granulaire.

22. Procédé selon l'une quelconque des revendications précédentes, **caractérisé en ce que** la phase interstitielle gazeuse comporte un gaz inerte.

23. Procédé selon l'une quelconque des revendications précédentes, **caractérisé en ce que** la phase interstitielle gazeuse comporte de l'air.

24. Procédé selon l'une des revendications précédentes, **caractérisé en ce qu'**il comporte une étape de durcissement par traitement thermique du matériau déposé, le milieu contraint granulaire (8) assurant le maintien en position du matériau déposé.

25. Dispositif de fabrication additive pour la mise en œuvre du procédé selon l'une des revendications précédentes, **caractérisé en ce qu'**il comporte une buse d'impression (3), et un bac d'impression (4) fixé sur un plateau (2), la buse d'impression (3) étant mobile par rapport au plateau (2) de sorte que l'extrémité de la buse d'impression (3) puisse occuper tous les points d'un volume utile d'impression délimité par le bac d'impression (4), le bac d'impression (4) contenant un milieu contraint granulaire (8) comprenant : une phase granulaire (6) constituée uniquement d'un matériau (9) se présentant sous la forme d'éléments discrets et solides qui interagissent au niveau de zones de contacts (12) entre eux ; et une phase interstitielle gazeuse (13).

26. Dispositif selon la revendication 25, **caractérisé en ce qu'**il comporte un dispositif (11) d'ajustement de la pression du milieu contraint granulaire (8).

## Patentansprüche

1. Verfahren zur additiven Fertigung, welches das Aufbringen eines Materials zum Bilden eines dreidimensionalen Objekts beinhaltet, **dadurch gekennzeichnet, dass** mindestens ein Schritt des Aufbringens des Materials von einer Druckdüse (3) ausgeführt wird, die in Bezug auf eine Platte (2) beweglich ist, so dass das Ende der Druckdüse (3) alle Punkte eines Drucknutzvolumens einnehmen kann, das durch einen auf der Platte (2) fixierten Druckbehälter (4) begrenzt wird, wobei dieser Schritt des Aufbringens des Materials in Suspension in einem körnigen gebundenen Medium (8), das in dem Druckbehälter (4) enthalten ist, durch eine Verlagerung der Druckdüse (3) in dem körnigen gebundenen Medium (8) und durch das Aufbringen des Materials während dieser Verlagerung ausgeführt wird, wobei dieses körnige gebundene Medium (8) umfasst:
- eine körnige Phase (6), die nur aus einem Material (9) besteht, das in Form von diskreten und festen Elementen vorliegt, die an Kontaktbereichen (12) untereinander interagieren;
- und eine gasförmige interstitielle Phase (13).

2. Verfahren nach Anspruch 1, **dadurch gekennzeichnet, dass** die Druckdüse (3) in das körnige gebundene Medium (8) eingeführt wird, wobei sie eine Verlagerung der diskreten Elemente um sie herum bewirkt.

3. Verfahren nach einem der Ansprüche 1 oder 2, **dadurch gekennzeichnet, dass** die körnige Phase eine Eigenschaft eines Schüttwinkels von weniger als 40° aufweist.

4. Verfahren nach einem der Ansprüche 1 bis 3, **dadurch gekennzeichnet, dass** die körnige Phase eine Eigenschaft einer Kompressibilität von weniger als 200°m/N aufweist.

5. Verfahren nach einem der Ansprüche 1 bis 4, **dadurch gekennzeichnet, dass** die körnige Phase einen Carr-Index von weniger als 25 aufweist.

6. Verfahren nach einem der Ansprüche 1 bis 5, **dadurch gekennzeichnet, dass** die Umgebungsbedingungen, in welche das körnige gebundene Medium (8) versetzt wird, zwischen den diskreten Elementen (9) vorliegen.

7. Verfahren nach einem der Ansprüche 1 bis 6, **dadurch gekennzeichnet, dass** die körnige Phase (6) ein einphasiges Material ist, das vernetzt oder amorph oder kristallisiert ist.

8. Verfahren nach einem der Ansprüche 1 bis 7, **dadurch gekennzeichnet, dass** die körnige Phase (6) ein pulverisiertes Polymer ist.

9. Verfahren nach einem der Ansprüche 1 bis 7, **dadurch gekennzeichnet, dass** die körnige Phase (6) ein pulverisiertes dehydriertes Kieselsäuregel ist.

10. Verfahren nach einem der Ansprüche 1 bis 7, **dadurch gekennzeichnet, dass** die körnige Phase (6) ein pulverisiertes Polyvinylacetat ist.

11. Verfahren nach einem der Ansprüche 1 bis 7, **dadurch gekennzeichnet, dass** die körnige Phase (6) ein pulverisiertes Polymethylmethacrylat ist.

12. Verfahren nach einem der Ansprüche 1 bis 7, **dadurch gekennzeichnet, dass** die körnige Phase (6) aus Natriumbicarbonat zusammengesetzt ist.

13. Verfahren nach einem der Ansprüche 1 bis 7, **dadurch gekennzeichnet, dass** die körnige Phase (6) aus Sand zusammengesetzt ist.

14. Verfahren nach einem der Ansprüche 1 bis 7, **dadurch gekennzeichnet, dass** die körnige Phase (6) aus Körnern von zerkleinertem Silikon zusammengesetzt ist.

15. Verfahren nach einem der Ansprüche 1 bis 7, **dadurch gekennzeichnet, dass** die körnige Phase (6) aus Cenosphären zusammengesetzt ist.

16. Verfahren nach Anspruch 15, **dadurch gekennzeichnet, dass** der mittlere Durchmesser der Cenosphären 100 bis 200 µm beträgt.

17. Verfahren nach einem der Ansprüche 15 oder 16, **dadurch gekennzeichnet, dass** die Dichte des Materials, aus dem die Cenosphären bestehen, 0,6 bis 0,8 g/cm³. beträgt.

18. Verfahren nach einem der Ansprüche 15 bis 17, **dadurch gekennzeichnet, dass** die Schüttdichte der Cenosphären 0,3 bis 0,5 g/cm³. beträgt.

19. Verfahren nach einem der vorhergehenden Ansprüche, **dadurch gekennzeichnet, dass** das aufgebrachte Material eine Viskosität zwischen 10⁻¹ mPa.s und 10⁷ mPa.s und bevorzugt zwischen 10² mPa.s und 10⁶ mPa.s aufweist.

20. Verfahren nach einem der vorhergehenden Ansprüche, **dadurch gekennzeichnet, dass** es ferner einen Schritt des Einstellens des Drucks des gebundenen körnigen Mediums umfasst.

21. Verfahren nach einem der vorhergehenden Ansprüche, **dadurch gekennzeichnet, dass** es ferner einen Schritt des Regelns der Temperatur des körnigen gebundenen Mediums umfasst.

22. Verfahren nach einem der vorhergehenden Ansprüche, **dadurch gekennzeichnet, dass** die gasförmige interstitielle Phase ein inertes Gas umfasst.

23. Verfahren nach einem der vorhergehenden Ansprüche, **dadurch gekennzeichnet, dass** die gasförmige interstitielle Phase Luft umfasst.

24. Verfahren nach einem der vorhergehenden Ansprüche, **dadurch gekennzeichnet, dass** es einen Schritt des Aushärtens des aufgebrachten Materials durch thermische Behandlung umfasst, wobei das körnige gebundene Medium (8) das Halten des aufgebrachten Materials in Position gewährleistet.

25. Vorrichtung zur additiven Fertigung zur Umsetzung des Verfahrens nach einem der vorhergehenden Ansprüche, **dadurch gekennzeichnet, dass** sie eine Druckdüse (3) und einen auf einer Platte (2) fixierten Druckbehälter (4) umfasst, wobei die Druckdüse (3) in Bezug auf die Platte (2) beweglich ist, so dass das Ende der Druckdüse (3) alle Punkte eines Drucknutzvolumens einnehmen kann, das durch den Druckbehälter (4) begrenzt wird, wobei der Druckbehälter (4) ein körniges gebundenes Medium (8) enthält, das umfasst: eine körnige Phase (6), die nur aus einem Material (9) besteht, das in Form von diskreten und festen Elementen vorliegt, die an Kontaktbereichen (12) untereinander interagieren; und eine gasförmige interstitielle Phase (13).

26. Vorrichtung nach Anspruch 25, **dadurch gekennzeichnet, dass** sie eine Vorrichtung (11) zum Einstellen des Drucks des körnigen gebundenen Mediums (8) umfasst.

## Claims

1. Additive manufacturing process including the deposition of a material to form a three-dimensional object, **characterized in that** at least one step of depositing the material is carried out by a printing nozzle (3) that is movable relative to a plate (2) such that the end of the printing nozzle (3) can occupy all the points of a useful printing volume that is delimited by a printing tray (4) fastened to the plate (2), this step of depositing the material being carried out in suspension within a stressed granular medium (8) contained in the printing tray (4), by moving the printing nozzle (3) within the stressed granular medium (8) and by depositing the material during this movement, this stressed granular medium (8) comprising:
- a granular phase (6) consisting solely of a material (9) taking the form of discrete, solid elements that interact in regions of contact (12) therebetween;
- and a gaseous interstitial phase (13).

2. Process according to Claim 1, **characterized in that** the printing nozzle (3) is introduced into the stressed granular medium (8) by causing the discrete elements to move around it.

3. Process according to one of Claims 1 and 2, **characterized in that** the granular phase has an angle of repose smaller than 40°.

4. Process according to one of Claims 1 to 3, **characterized in that** the granular phase has a compressibility lower than 200 m/N.

5. Process according to one of Claims 1 to 4, **characterized in that** the granular phase has a Carr index lower than 25.

6. Process according to one of Claims 1 to 5, **characterized in that** the ambient conditions under which the stressed granular medium (8) is placed are present between the discrete elements (9).

7. Process according to one of Claims 1 to 6, **characterized in that** the granular phase (6) is a single-phase material, which is cross-linked or amorphous or crystallized.

8. Process according to one of Claims 1 to 7, **characterized in that** the granular phase (6) is a powdered polymer.

9. Process according to one of Claims 1 to 7, **characterized in that** the granular phase (6) is a powdered dehydrated silica gel.

10. Process according to one of Claims 1 to 7, **characterized in that** the granular phase (6) is a powdered polyvinyl acetate.

11. Process according to one of Claims 1 to 7, **characterized in that** the granular phase (6) is a powdered polymethyl methacrylate.

12. Process according to one of Claims 1 to 7, **characterized in that** the granular phase (6) is composed of sodium bicarbonate.

13. Process according to one of Claims 1 to 7, **characterized in that** the granular phase (6) is composed of sand.

14. Process according to one of Claims 1 to 7, **characterized in that** the granular phase (6) is composed of granules of ground silicone.

15. Process according to one of Claims 1 to 7, **characterized in that** the granular phase (6) is composed of cenospheres.

16. Process according to Claim 15, **characterized in that** the average diameter of the cenospheres is 100 to 200 µm.

17. Process according to one of Claims 15 and 16, **characterized in that** the density of the material from which the cenospheres are made is 0.6 to 0.8 g/cm³.

18. Process according to one of Claims 15 to 17, **characterized in that** the bulk density of the cenospheres is 0.3 to 0.5 g/cm³.

19. Process according to any one of the preceding claims, **characterized in that** the deposited material has a viscosity comprised between 10⁻¹ mPa.s and 10⁷ mPa.s and preferably comprised between 10² mPa.s and 10⁶ mPa.s.

20. Process according to any one of the preceding claims, **characterized in that** it further comprises a step of adjusting the pressure of the stressed granular medium.

21. Process according to any one of the preceding claims, **characterized in that** it further comprises a step of controlling the temperature of the stressed granular medium.

22. Process according to any one of the preceding claims, **characterized in that** the gaseous interstitial phase comprises an inert gas.

23. Process according to any one of the preceding claims, **characterized in that** the gaseous interstitial phase comprises air.

24. Process according to one of the preceding claims, **characterized in that** it comprises a step of hardening the deposited material by heat treatment, the stressed granular medium (8) keeping the deposited material in position.

25. Additive manufacturing device for implementing the process according to one of the preceding claims, **characterized in that** it comprises a printing nozzle (3) and a printing tray (4) that is fastened to a plate (2), the printing nozzle (3) being movable relative to the plate (2) such that the end of the printing nozzle (3) can occupy all the points of a useful printing volume that is delimited by the printing tray (4), the printing tray (4) containing a stressed granular medium (8) comprising: a granular phase (6) consisting solely of a material (9) taking the form of discrete, solid elements that interact in regions of contact (12) therebetween; and a gaseous interstitial phase (13).

26. Device according to Claim 25, **characterized in that** it comprises a device (11) for adjusting the pressure of the stressed granular medium (8).
